# EUROPÄISCHE PATENTSCHRIFT

(11) **EP 1 579 129 B1**
(45) Veröffentlichungstag und Bekanntmachung des Hinweises auf die Patenterteilung: **03.01.2007**
(21) Anmeldenummer: 03788882.3
(22) Anmeldetag: 18.12.2003
(51) Int. Cl.: F16H 61/12, B60W 10/04, B60W 10/10

(54) **VERFAHREN UND VORRICHTUNG ZUR FEHLERÜBERWACHUNG EINER ELEKTR ONISCHEN STEUEREINRICHTUNG EINES IM ANTRIEBSSTRANG EINES KRAFTFAHRZEUGS ANGEORDNETEN AUTOMATISCHEN GETRIEBES**
METHOD AND DEVICE FOR MONITORING THE ERRORS OF AN ELECTRONIC CONTROL UNIT OF AN AUTOMATED TRANSMISSION THAT IS SITUATED IN THE DRIVE TRAIN OF A MOTOR VEHICLE
PROCEDE ET DISPOSITIF DE CONTROLE D'ERREUR D'UN DISPOSITIF DE COMMANDE ELECTRONIQUE D'UNE TRANSMISSION AUTOMATIQUE DISPOSEE DANS LA CHAINE CINEMATIQUE D'UN VEHICULE

(30) Priorität: 23.12.2002 DE 10260870
(43) Veröffentlichungstag der Anmeldung: 28.09.2005
(73) Patentinhaber: LuK Lamellen und Kupplungsbau Beteiligungs KG, 77815 Bühl (DE)
(72) Erfinder: MAXON, Andreas, 76131 Karlsruhe (DE); EICH, Jürgen, 77815 Bühl (DE)
(86) Internationale Anmeldenummer: PCT/DE2003/004180
(87) Internationale Veröffentlichungsnummer: WO 2004/059195

(56) Entgegenhaltungen:
- EP-A- 0 449 424
- GB-A- 2 315 132
- US-A- 5 117 791

## Beschreibung

Die Erfindung betrifft ein Verfahren und eine Vorrichtung zur Fehlerüberwachung einer elektronischen Steuereinrichtung eines im Antriebsstrang eines Kraftfahrzeugs angeordneten automatischen Getriebes, insbesondere automatisierten Schaltgetriebes, wie aus der gattungsgemäßen GB 2 315 132 bekannt.

Automatische Getriebe, insbesondere automatisierte Schaltgetriebe, finden in Kraftfahrzeugen nicht nur wegen des verbesserten Fahrkomforts sondern auch wegen der damit realisierbaren Verbrauchsminderungen zunehmend Verwendung.

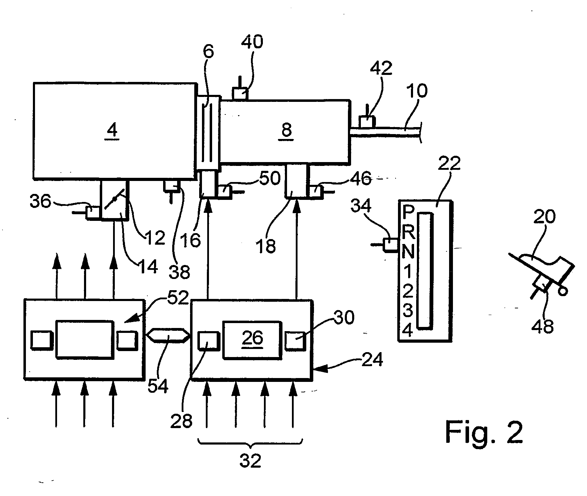

Fig. 2 zeigt ein Blockschaltbild eines mit einem automatisierten Schaltgetriebe ausgerüsteten Fahrzeugantriebsstrangs.

Ein Verbrennungsmotor 4 ist über eine Kupplung 6 mit einem Schaltgetriebe 8 verbunden, von dem eine Antriebswelle 10 zu angetriebenen Rädern des Kraftfahrzeugs führt.

Zur Leistungssteuerung des Motors dient ein Leistungsstellorgan 12, beispielsweise eine Drosselklappe bei einem Ottomotor oder eine Regelstange bei einem Dieselmotor, die von einem Aktor 14 betätigt ist. Für die Betätigung der Kupplung 6 ist eine Aktor 16 vorgesehen. Zur Betätigung des Schaltgetriebes 8 dienen Aktoren, die zusammenfassend mit 18 bezeichnet sind.

Weiter weist das Kraftfahrzeug ein Fahrpedal 20 und eine Betätigungseinheit 22 zum Anwählen verschiedener Gänge oder Schaltprogramme zur Betätigung des Schaltgetriebes 8 auf.

Zur Steuerung der Aktoren 16 und 18 dient ein Getriebesteuergerät 24, das einen Mikroprozessor 26 mit Programmspeicher 28 und Datenspeicher 30 aufweist und dessen Eingänge 32 mit wenigstens einigen von Sensoren 34, 36, 38, 40, 42, 46, 48 und 50 zum Erfassen der Stellung der Betätigungseinheit 22, des Leistungsstellorgans 12, der Motordrehzahl, der Drehzahl einer Getriebeeingangswelle, der Drehzahl der Antriebswelle, der Stellung der Aktoren 18 des Getriebes 8, der Stellung des Fahrpedals 20 sowie der Stellung des Kupplungsaktors 16 verbunden sind.

Das Getriebesteuergerät 24 ist mit einem Motorsteuergerät 52 über einen Bus 54 verbunden, dessen Ausgänge mit dem Aktor 14 sowie einem Kraftstoffzufuhrsystem des Motors 4 und ggf. einer Zündung sowie ggf. weiteren Stellgliedern des Motors 4 verbunden sind und dessen Eingänge an einige der genannten Aktoren sowie ggf. weiteren Aktoren angeschlossen sind.

Die Aufteilung von Hardware- und Softwareumfängen zwischen den Steuergeräten 24 und 52 kann unterschiedlich sein.

Aufbau und Funktion des Systems sind an sich bekannt und werden daher nicht im Einzelnen erläutert. Die Schaltungen des Schaltgetriebes 8, d.h. der Kupplungsaktor 16 und die Aktoren 18 werden insbesondere abhängig von der Stellung des Fahrpedals 20 bzw. der Stellung des Leistungsstellorgans 12, das unmittelbar mit dem Fahrpedal 20 gekoppelt oder vollständig elektronisch betätigt sein kann, und der Drehzahl der Antriebswelle 10 und/oder der Motordrehzahl gesteuert, wobei ein komplexes, im Programmspeicher 28 des Getriebesteuergerätes 24 abgelegtes Programm, den jeweils einzulegenden Gang bzw. den Ablauf der Schaltungen bestimmt. Zumindest während einer Schaltung wird das vom Motor abzugebende Moment nicht nur von der Stellung des Fahrpedals 20 bestimmt, sondern auch von dem durch das Getriebesteuergerät 24 gesteuerte Programm, da beim Öffnen der Kupplung 6 für einen Gangwechsel das Motormoment in den meisten Fällen zunächst zurückgenommen werden muss, um nach Umschalten des Ganges beim Schließen der Kupplung wieder anzusteigen, damit ein komfortabler Gangwechsel gewährleistet ist. Der Eingriff in das Motormoment kann dabei unmittelbar über eine entsprechende elektronisch gesteuerte Betätigung des Leistungsstellorgans 12, mittels eines zusätzlichen Leistungsstellorgans 12 oder durch Eingriff in die Zündung erfolgen.

Falls aufgrund von Fehlern im Steuergerät 24 vom Motor 4 ein Moment gefordert wird, das über dem von einem Fahrer gewünschten Moment liegt, kann das Fahrzeug, entgegen dem Wunsch des Fahrers, beschleunigen, was zu sicherheitskritischen Situationen führt.

Der Erfindung liegt die Aufgabe zugrunde, Abhilfe für das vorgenannte Problem zu schaffen.

Diese Aufgabe wird mit einem Verfahren zur Fehlerüberwachung eines elektronischen Steuergerätes eines im Antriebsstrang eines Kraftfahrzeugs angeordneten automatischen Getriebes, insbesondere automatisierten Schaltgetriebes gelöst, wobei die Steuereinrichtung in fehlerfreiem Zustand in vorbestimmten Betriebszuständen vorbestimmte Momente von einem Antriebsmotor anfordernde Signale erzeugt, entsprechend denen das vom Antriebsmotor erzeugte Moment gesteuert wird, bei welchem Verfahren ein vom angeforderten Moment abhängiger Anforderungswert mit einem vorbestimmten Grenzwert verglichen wird und ein Fehlersignal erzeugt wird, wenn der Anforderungswert den Grenzwert übersteigt.

Bei einer vorteilhaften Durchführungsform des Verfahrens entspricht der Anforderungswert der Summe der während einer definierten Zeitdauer angeforderten Momente.

Vorteilhafterweise hängt der Grenzwert von der Stellung eines Fahrpedals ab.

Der Grenzwert hängt vorteilhafter Weise vom geschalteten Gang ab. So kann z.B. ein Momenten erhöhender Eingriff für bestimmte Gänge verboten werden.

Der Grenzwert kann auch geschwindigkeitsabhängig sein. (Ungewolltes Beschleunigen um 5 km/h bei v = 10 km/h ist deutlich unangenehmer als bei
v = 150 km/h).

Bei einer bevorzugten Durchführungsform des Verfahrens erfolgt der Vergleich nur bei Vorliegen vorbestimmter Betriebszustände.

Bei einer Vorrichtung zur Fehlerüberwachung einer elektronischen Steuereinrichtung eines im Antriebsstrang eines Kraftfahrzeugs angeordneten automatischen Getriebes, insbesondere automatisierten Schaltgetriebes, wobei die Steuereinrichtung einen Mikroprozessor sowie Programm- und Datenspeicher aufweist, mit Sensoren zur Erfassung von Betriebsparametern des Antriebsstrangs verbunden ist, an wenigstens einem Aktor zur Steuerung der Übersetzung des Getriebes angeschlossen ist und bei Vorliegen vorbestimmter Betriebszustände, insbesondere während des Ablaufs einer Gangschaltung, in fehlerfreiem Zustand vorbestimmte Momente von einem Antriebsmotor anfordernde Signale erzeugt, entsprechend denen das vom Antriebsmotor erzeugte Moment gesteuert wird, enthält die Steuereinrichtung eine Vorrichtung zur Durchführung wenigstens eines der vorgenannten Verfahren.

Die Erfindung wird im Folgenden anhand schematischer Zeichnungen beispielsweise und mit weiteren Einzelheiten erläutert.

Es stellen dar:
Fig. 1 ein Flussdiagramm zur Erläuterung eines Beispiels des erfindungsgemäßen Verfahrens und
Fig. 2 das bereits erläuterte Blockschaltbild eines in seinem Aufbau an sich bekannten Antriebsstrangs eines Fahrzeugs.

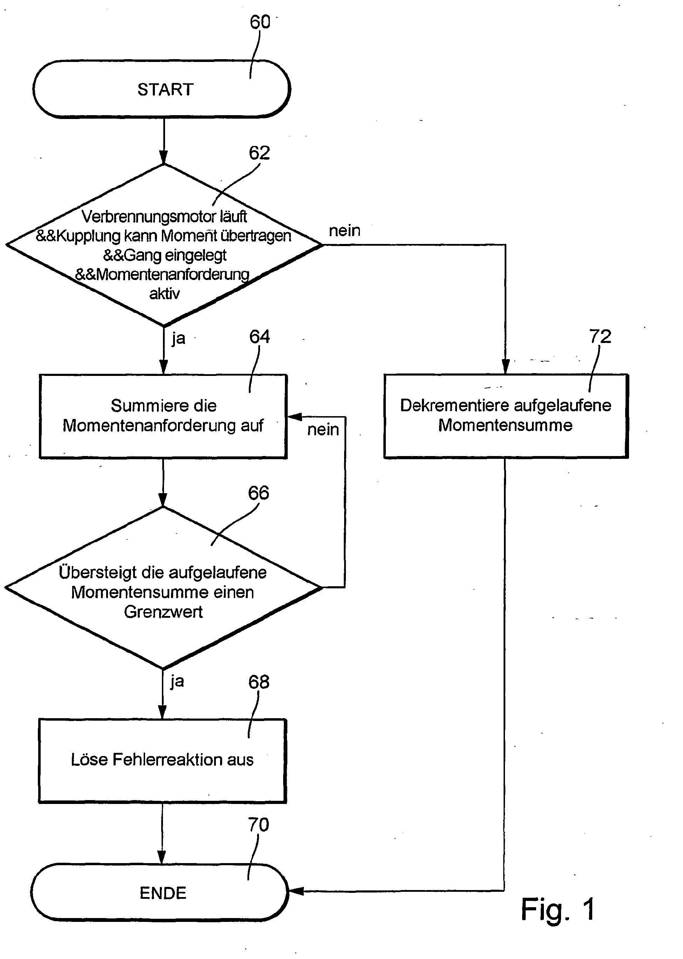

Gemäß Fig. 1 wird das erfindungsgemäße Überwachungsprogramm im Schritt 60 gestartet, beispielsweise nach Einschalten der Zündung. Im Schritt 62 wird überprüft, ob vorbestimmte Bedingungen vorliegen, im dargestellten Beispiel, ob der Motor 4 (Fig. 2) läuft, die Kupplung 6 sich in einem Zustand befindet, in dem sie ein Moment übertragen kann, ein Gang eingelegt ist und das im Steuergerät 24 abgelegte Programm zur Abgabe eines ein Motormoment anfordernden Signals aktiv ist. Wenn im Schritt 62 festgestellt wird, dass die genannten Bedingungen erfüllt sind, werden im Schritt 64 die entsprechend der Taktfrequenz des Systems bei jedem Takt angeforderten Momente aufsummiert und im Schritt 66 laufend festgestellt, ob der Summenwert der angeforderten Momente, der einen Anforderungswert darstellt, einen Grenzwert übersteigt. Ist dies nicht der Fall, so dauert die Summenbildung solange an, bis die Zustände des Schrittes 62 vorliegen. Wird der Grenzwert überschritten, wird im Schritt 68 ein Fehlersignal ausgelöst, das zu einer Fehlerreaktion führt, in der beispielsweise durch einen Neustart des Getriebesteuergerätes 24 das angeforderte Moment zurückgenommen wird. Anschließend endet das Programm im Schritt 70. Liegen die Bedingungen des Schrittes 62 nicht mehr vor, so wird im Schritt 72 die aufgelaufene Momentensumme (Schritt 64) schrittweise bis auf Null vermindert,

Das beispielhaft geschilderte Verfahren kann vielfältig abgeändert werden.

Beispielsweise können die im Schritt 62 überprüften Bedingungen andere sein. Im Extremfall kann nur überprüft werden, ob seitens des Getriebesteuergerätes 24 eine Momentenanforderung vorliegt.
Im Schritt 64 könnte statt des angeforderten Momentenmomentes auch das Minimum aus übertragbarem Kupplungsmoment und Motormoment aufsummiert werden.

Im Schritt 64 müssen die Momente nicht zwangsläufig aufsummiert werden. Vielmehr kann das angeforderte Moment mit einem von der Stellung des Fahrpedals 20 und ggf. weiteren Betriebsparametem abhängigem Moment verglichen werden, das unmittelbar den Grenzwert (Schritt 66) bilden kann.

Je nach ablaufenden Algorythmen kann die Momentenanforderung darin bestehen, dass lediglich eine Zunahme des Motormoments gefordert wird, die bei funktionstüchtigem Getriebesteuergerät 24 auf Null zurückgeht, wenn das geforderte Moment vorliegt, (das beispielsweise durch die Stellung des Leistungsstellorgans 12 und der Drehzahl der Brennkraftmaschine bestimmt werden kann) oder eine bestimmte Höhe des Motormoments angefordert wird. Die Summen- bzw. Integralbildung im Schritt 64 hat den Vorteil, dass über kurze Zeit andauernde hohe Momentenanforderungen als ebenso gefährlich erkannt werden, wie über längere Zeit andauernde geringe Momentenanforderungen, die beide zu gefährlichen Zuständen führen können.

Der Grenzwert, der im Schritt 66 überschritten werden muss, damit ein Fehlersignal ausgelöst wird, kann bei der Summenbildung das Mehrfache des maximalen Motormoments betragen. Der Grenzwert ist vorteilhafterweise von der Stellung des Fahrpedals 20 abhängig. Im einfachsten Fall ist damit sichergestellt, dass das vom Getriebesteuergerät 24 angeforderte Motormoment das der Fahrpedalstellung 20 entsprechende Motormoment nicht übersteigt. Der Grenzwert kann von weiteren Größen abhängen, wie beispielsweise vom gewählten Schaltprogramm, da für ein ruckfreies Schalten häufig kurzzeitige hohe Motormomente erforderlich sind, damit der Motor beispielsweise beim Schalten in einen niedrigeren Gang beim Einkuppeln mit einer entsprechenden höheren Drehzahl läuft.

Die Erfindung ist für automatisierte Schaltgetriebe jeglicher Bauart verwendbar, kann aber auch für ihre Übersetzung kontinuierlich verändernde Getriebe eingesetzt werden, wenn die entsprechenden Steuergeräte zur Verbesserung der Schaltdynamik in instationären Zuständen das Motormoment beeinflussen.

Die Ausführungsbeispiele sind nicht als Einschränkung der durch die Ansprüche definierten Erfindung zu verstehen.

## Patentansprüche

1. Verfahren zur Fehlerüberwachung einer elektronischen Steuereinrichtung (24) eines im Antriebsstrang eines Kraftfahrzeugs angeordneten automatischen Getriebes (6, 8), insbesondere automatisierten Schaltgetriebes, wobei die Steuereinrichtung in fehlerfreiem Zustand in vorbestimmten Betriebszuständen vorbestimmte Momente von einem Antriebsmotor (4) anfordernde Signale erzeugt, entsprechend denen das vom Antriebsmotor erzeugte Moment gesteuert wird, **dadurch gekennzeichnet, daß** ein vom angeforderten Moment abhängiger Anforderungswert mit einem vorbestimmten Grenzwert verglichen und ein Fehlersignal erzeugt wird, wenn der Anforderungswert den Grenzwert übersteigt.

2. Verfahren nach Anspruch 1, wobei der Anforderungswert der Summe der während einer definierten Zeitdauer angeforderten Momente entspricht.

3. Verfahren nach Anspruch 1, wobei der Grenzwert von der Stellung eines Fahrpedals (20) abhängt.

4. Verfahren nach einem der Ansprüche 1 bis 3, wobei der Vergleich nur bei Vorliegen vorbestimmter Betriebszustände erfolgt.

5. Vorrichtung zur Fehlerüberwachung einer elektronischen Steuereinrichtung (24) eines im Antriebsstrang eines Kraftfahrzeugs angeordneten automatischen Getriebes (6, 8), insbesondere automatisierten Schaltgetriebes, wobei die Steuereinrichtung einen Mikroprozessor (26) sowie Programm- und Datenspeicher (28, 30) aufweist, mit Sensoren (34 - 50) zur Erfassung von Betriebsparametern des Antriebsstrangs verbunden ist, an wenigstens einem Aktor (46, 50) zur Steuerung der Übersetzung des Getriebes angeschlossen ist und bei Vorliegen vorbestimmter Betriebszustände, insbesondere während des Ablaufs einer Gangschaltung, in fehlerfreiem Zustand vorbestimmte Momente von einem Antriebsmotor (4) anfordernde Signale erzeugt entsprechend, denen das vom Antriebsmotor erzeugte Moment gesteuert wird, **dadurch gekennzeichnet, daß** die Steuereinrichtung eine Vorrichtung enthält, in der das Verfahren nach einem der Ansprüche 1 bis 4 ablaüft.

## Claims

1. A method for error monitoring of an electronic control device (24) of an automatic transmission (6, 8) situated in a power train of a motor vehicle, in particular an automated shift transmission, wherein under error-free conditions in predetermined operating modes the control device produces signals that request predetermined torques from a drive engine (4), corresponding to which the torque produced by the drive engine is controlled, **characterized in that** a request value that depends on the requested torque is compared to a predetermined limiting value, and an error signal is generated if the request value exceeds the limiting value.

2. The method according to Claim 1, wherein the request value corresponds to the sum of the torques requested during a defined time period.

3. The method according to Claim 1, wherein the limiting value depends on the position of an accelerator pedal (20).

4. The method according to one of Claims 1 through 3, wherein the comparison takes place only when predetermined operating conditions are present.

5. A method for error monitoring of an electronic control device (24) of an automatic transmission (6, 8) situated in a power train of a motor vehicle, in particular an automated shift transmission, wherein the control device has a microprocessor (26) as well as program and data memories (28, 30), is linked to sensors (34 - 50) for detecting operating parameters of the power train, is connected to at least one actuator (46, 50) for controlling the transmission ratio of the transmission, and when predetermined operating conditions are present, in particular during the process of a shifting of gears, under error-free conditions produces signals that request predetermined torques from a drive engine (4), corresponding to which the torque produced by the drive engine is controlled, **characterized in that** the control device contains a device in which the method according to one of Claims 1 through 4 runs.

## Revendications

1. Procédé pour le contrôle d'erreur d'un dispositif de commande (24) électronique d'une transmission (6, 8) automatique disposée dans la chaîne cinématique d'un véhicule, en particulier d'une boîte de vitesses automatisée, le dispositif de commande générant des signaux exigeant des moments prédéfinis à un moteur d'entraînement (4) dans des états de service prédéfinis dans l'état sans erreur, signaux en fonction desquels le moment généré par le moteur d'entraînement est commandé, **caractérisé en ce qu'**une valeur de demande dépendante du moment demandé est comparée avec une valeur limite prédéfinie et un signal d'erreur est généré lorsque la valeur de demande dépasse la valeur limite.

2. Procédé selon la revendication 1, la valeur de demande correspondant à la somme des moments demandés pendant une durée définie.

3. Procédé selon la revendication 1, la valeur limite dépendant de la position d'une pédale d'accélérateur (20).

4. Procédé selon l'une quelconque des revendications 1 à 3, la comparaison s'effectuant seulement lorsqu'on dispose d'états de service prédéfinis.

5. Dispositif pour le contrôle d'erreur d'un dispositif de commande (24) électronique d'une transmission (6, 8) automatique disposée dans la chaîne cinématique d'un véhicule, en particulier d'une boîte de vitesses automatisée, le dispositif de commande présentant un microprocesseur (26) ainsi qu'une mémoire de programme et de données (28, 30), étant relié à des capteurs (34-50) pour la saisie de paramètres de service de la chaîne cinématique, étant raccordé à au moins un actionneur (46, 50) pour la commande de la multiplication de la transmission et générant des signaux demandant des moments prédéfinis à un moteur d'entraînement (4) dans l'état sans erreur, avec l'existence d'états de service prédéfinis, en particulier pendant le déroulement d'un passage de vitesse, signaux en fonction desquels le moment généré par le moteur d'entraînement est commandé, **caractérisé en ce que** le dispositif de commande contient un dispositif dans lequel le procédé se déroule selon l'une quelconque des revendications 1 à 4.
